# FASCICULE DE BREVET EUROPEEN

(11) **EP 3 554 947 B1**
(45) Date de publication et mention de la délivrance du brevet: **27.01.2021**
(21) Numéro de dépôt: 17816787.0
(22) Date de dépôt: 14.12.2017
(51) Int. Cl.: B64D 11/06

(54) **ARRANGEMENT DE SIÈGES INDIVIDUELS POUR PASSAGERS D'UN AVION**
ANORDNUNG AUS EINZELNEN SITZEN FÜR PASSAGIERE EINES FLUGZEUGS
ARRANGEMENT OF INDIVIDUAL SEATS FOR PASSENGERS OF AN AEROPLANE

(30) Priorité: 14.12.2016 FR 1670759
(43) Date de publication de la demande: 23.10.2019
(73) Titulaire: Safran Seats, 78370 Plaisir (FR)
(72) Inventeur: WHITE, Jeremy, Enfield Middlesex EN1 2QW (GB); SANDHAM, Nicholas, London SW18 3BG (GB); SEALE, Richard, Warwickshire CV32 5BE (GB); CHRAIBI, Omar, London W8 6TQ (GB)
(74) Mandataire: Marconnet, Sébastien
(86) Numéro de dépôt international: PCT/EP2017/082768
(87) Numéro de publication internationale: WO 2018/109066

(56) Documents cités:
- WO-A1-2016/164564
- WO-A2-2015/061688
- FR-A1- 2 920 011
- US-A1- 2014 361 585

## Description

La présente invention porte sur un arrangement de sièges individuels pour passager d'un avion.

Les sièges d'avion de type "Classe Affaires" offrent aux passagers différentes positions de confort, de la position "assise" jusqu'à une position "allongée" dans laquelle le siège définit un plan de couchage sensiblement horizontal pour le passager.

Des positions intermédiaires de confort sont aussi proposées, telles que la position "relax" dans laquelle le dossier est fortement incliné. Généralement, ces positions sont obtenues par l'inclinaison du dossier, pivotant autour d'un axe horizontal et perpendiculaire à l'axe du siège. Le passager peut alors rester sur le siège lors de transitions entre les différentes positions.

Le lit est généralement constitué notamment du dossier, de l'assise, d'un repose-jambes et d'un repose-pieds, ces derniers pouvant être fixes ou liés à la cinématique du siège.

Certains agencement de sièges pour cabine d'avion de type "Classe Affaires" permettent un accès direct à une allée de circulation pour tous les passagers, via un passage disposé entre deux sièges agencés l'un derrière l'autre selon la direction longitudinale de l'avion. Les passagers peuvent ainsi sortir de leur siège facilement notamment lorsque le siège est en position "allongée" sans gêner d'autres passagers.

Dans certaines configurations, les sièges sont disposés suivant deux colonnes longitudinales et les sièges d'une même rangée présentent des axes inclinés, c'est-à-dire qu'ils forment un angle non nul, par rapport à l'axe longitudinal de l'arrangement.

Le document US2007246981 décrit une configuration en chevron dite de type "Herringbone" en anglais, dans laquelle les sièges d'une même rangée sont tournées vers l'intérieur en direction de l'axe longitudinal de l'arrangement, c'est-à-dire que leurs axes coupent l'axe longitudinal de l'avion à l'avant des sièges.

Dans la configuration décrite dans le document WO03/013903 dite de type "reverse Herringbone", les sièges d'une même rangée sont tournés vers l'extérieur de l'axe longitudinal, c'est-à-dire que les axes coupent l'axe longitudinal de l'avion à l'arrière des sièges. Les passagers sont ainsi orientés vers l'allée de circulation de la cabine. cabine.

Le document WO2015061688 décrit des unités de siège qui comportent deux sièges agencés de manière à être orientés dans des directions opposées.

L'invention vise à améliorer la modularité des configurations existantes en proposant un arrangement de sièges individuels destiné à être installé dans une cabine d'avion comportant un premier ensemble de deux sièges et un deuxième ensemble de deux sièges, chaque siège présentant un axe et étant convertible entre une position assise et une position allongée, ledit arrangement présentant un axe longitudinal, caractérisé en ce que:
- un premier siège du premier ensemble est positionné en face d'un premier siège du deuxième ensemble,
- un deuxième siège du premier ensemble est positionné en face d'un deuxième siège du deuxième ensemble,
- le premier siège et le deuxième siège du premier ensemble étant tournés vers l'intérieur en direction de l'axe longitudinal de l'arrangement,
- le premier siège et le deuxième siège du deuxième ensemble étant tournés vers l'extérieur à l'opposé de l'axe longitudinal de l'arrangement,
et en ce que l'arrangement comporte en outre:
- une première console centrale et une deuxième console centrale positionnées entre le premier ensemble de sièges et le deuxième ensemble de sièges,
- la première console centrale comportant une première zone de pieds et une deuxième zone de pieds ouvertes suivant deux directions opposées l'une par rapport à l'autre et associées respectivement au premier siège du premier ensemble et au premier siège du deuxième ensemble,
- la deuxième console centrale comportant une première zone de pieds et une deuxième zone de pieds ouvertes suivant deux directions opposées l'une par rapport à l'autre et associées respectivement au deuxième siège du premier ensemble et au deuxième siège du deuxième ensemble.

L'invention permet ainsi de proposer aux passagers une diversité de positionnements dans la cabine d'avion tout en disposant d'une grande modularité dans la configuration de l'arrangement de sièges.

Selon une réalisation, dans chaque console centrale, les zones de pieds sont superposées au moins partiellement suivant l'axe longitudinal de l'arrangement.

Selon une réalisation, ledit arrangement comporte une cloison centrale s'étendant suivant l'axe longitudinal pour séparer entre eux les sièges d'un même ensemble. Une telle configuration permet de créer deux modules de sièges face à face.

Selon une réalisation, la cloison centrale est escamotable entre une position déployée et une position rangée.

Selon une réalisation, en position rangée, la cloison centrale est logée au moins partiellement dans un espace entre les deux consoles centrales.

Selon une réalisation, la cloison centrale est réalisée en une seule partie.

Selon une réalisation, la cloison centrale est réalisée en deux parties pour isoler les sièges côte à côte des deux ensembles de sièges.

Selon une réalisation, ladite cloison centrale est reliée mécaniquement à des mâts de l'arrangement.

Selon une réalisation, ledit arrangement comporte en outre une cloison transversale s'étendant suivant une direction perpendiculaire à l'axe longitudinal dudit arrangement pour isoler le premier ensemble de sièges par rapport au deuxième ensemble de siège.

Selon une réalisation, la cloison transversale est réalisée en deux parties escamotables entre une position déployée et une position rangée, lesdites deux parties permettant de séparer indépendamment les premiers sièges de chaque ensemble ou les deuxièmes sièges de chaque ensemble.

Selon une réalisation, dans la position rangée, chaque partie de la cloison transversale est logée au moins partiellement dans un espace ménagé dans une console centrale correspondante.

Selon une réalisation, la cloison transversale porte des écrans associés chacun à un siège dudit arrangement.

Selon une réalisation, ledit arrangement comporte en outre au moins un support portant un écran, ledit support étant monté rotatif par rapport à un mât et ledit écran étant monté rotatif par rapport audit support.

Selon une réalisation, ledit arrangement comporte au moins une cloison latérale s'étendant le long d'un couloir de circulation, ladite cloison latérale comportant des moyens de fermeture d'un passage entre le siège et la console centrale correspondante.

Selon une réalisation, la cloison latérale est portée par des mâts.

Selon une réalisation, les mâts sont creux pour autoriser le passage de faisceaux électriques acheminant notamment des signaux de puissance et de données pour des systèmes multimédia associés aux sièges.

Selon une réalisation, chaque siège est associé à une coque positionnée autour de dossiers des sièges.

L'invention a également pour objet une cabine d'avion comportant:
- un groupe central de sièges et
- deux groupes latéraux de sièges situés de part et d'autre du groupe central de sièges,
- chaque groupe latéral de sièges étant séparé du groupe central par un couloir de circulation,
caractérisé en ce que le groupe central comporte au moins un arrangement de quatre sièges tel que précédemment défini.

Selon une réalisation, le au moins un arrangement de quatre sièges est implanté à une extrémité du groupe central de sièges.

Une telle configuration permet d'économiser de l'espace dans la cabine en évitant d'avoir à implanter un module intégrant les zones de pieds à une extrémité du groupe central.

Selon une réalisation, les groupes latéraux sont formés notamment par une répétition de modules de deux sièges associés à une console centrale.

Bien entendu les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
- Les figures 1a à 1d sont des vues en perspective illustrant un premier mode de réalisation de l'arrangement de sièges selon l'invention dit "mode cinéma";
- La figure 2 est une vue en perspective d'un module double pouvant être utilisé pour réaliser une pluralité d'arrangements de sièges selon la présente invention situés dos à dos ;
- Les figures 3a à 3g sont des vues en perspective illustrant un deuxième mode de réalisation de l'arrangement de sièges selon l'invention dit "mode bureau";
- Les figures 4a à 4f sont des vues de dessus illustrant différentes configurations de l'arrangement selon l'invention pouvant être sélectionnées en fonction du nombre de passagers;
- Les figures 5a à 5j illustrent différentes configurations de cabine d'avion selon l'invention ayant des nombres de places différents.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

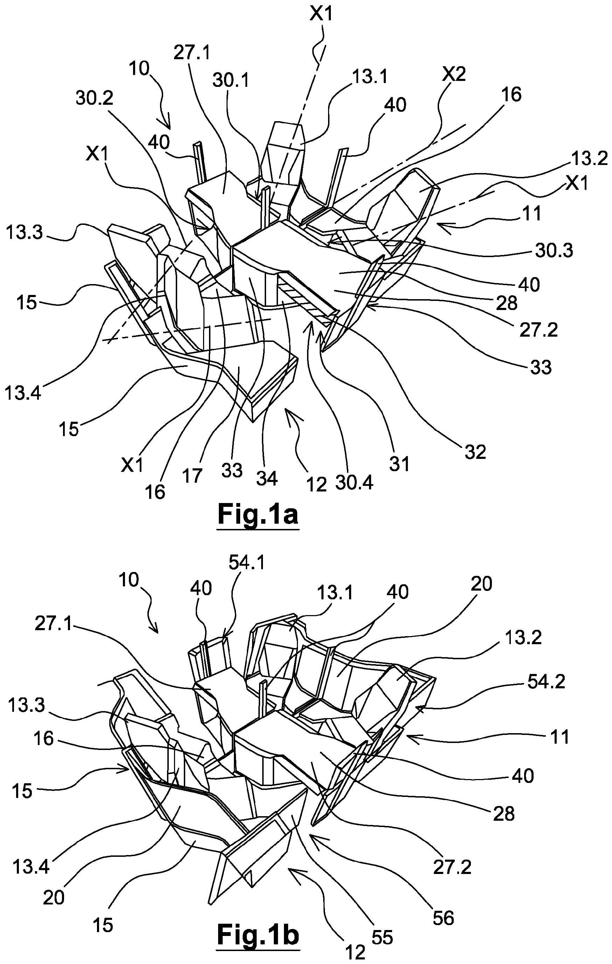

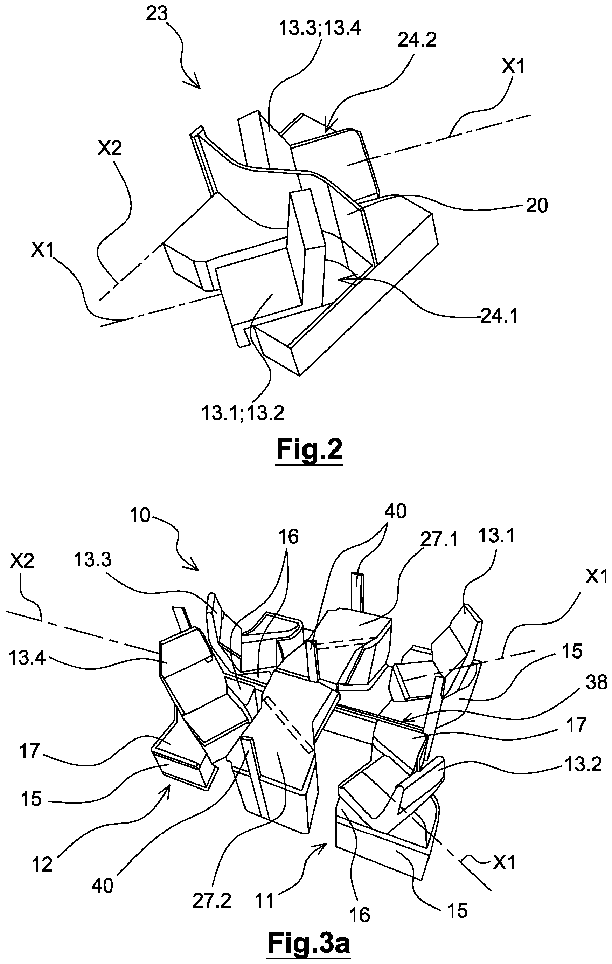

Les figures 1a à 1d et 3a à 3g montre un arrangement 10 de sièges individuels destiné à être installé dans une cabine d'avion. Cet arrangement 10 comporte un premier ensemble 11 de deux sièges 13.1, 13.2 et un deuxième ensemble 12 de deux sièges 13.3, 13.4. Dans chaque ensemble 11, 12, les sièges (13.1 et 13.2 pour l'ensemble 11, et 13.3 et 13.4 pour l'ensemble 12) sont situés côte à côte l'un de l'autre.

Chaque siège 13.1-13.4 présente un axe X1 correspondant à l'intersection entre un plan horizontal et un plan de symétrie du siège. Chaque siège 13.1-13.4 est de préférence convertible entre une position "assise" correspondant à la position utilisée notamment lors des phases d'arrêt, de décollage, et d'atterrissage de l'avion et une position "allongée" dans laquelle le siège 13.1-13.4 définit un plan de couchage sensiblement horizontal pour le passager. Chaque siège 13.1-13.4 pourra également prendre des positions intermédiaire, dites positions relax, entre ces deux positions extrêmes.

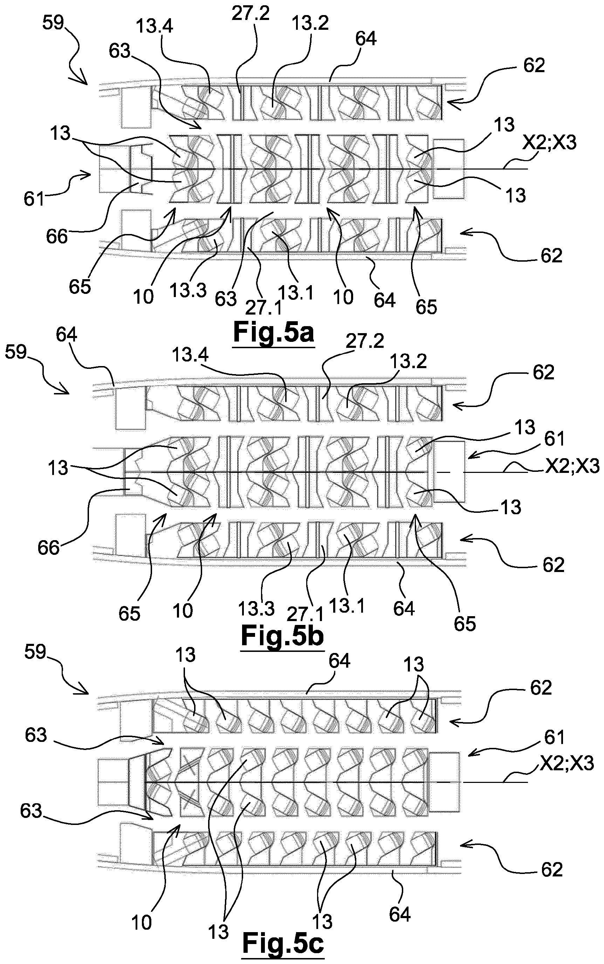

L'arrangement 10 présente un axe longitudinal X2 qui pourra s'étendre suivant l'axe X3 de la cabine d'avion (cf. figures 5a à 5j) ou être parallèle à cet axe X3. En variante, l'axe X2 pourra être sensiblement perpendiculaire ou former un angle quelconque par rapport à l'axe X3 de la cabine. L'axe X2 longitudinal passe entre les sièges 13.1 et 13.2 (respectivement 13.3 et 13.4) d'un même ensemble 11 (respectivement 12). Cet axe X2 pourra se situer dans un plan de symétrie de l'arrangement 10.

Plus précisément, un premier siège 13.1 du premier ensemble 11 est positionné en face d'un premier siège 13.3 du deuxième ensemble 12 et un deuxième siège 13.2 du premier ensemble 11 est positionné en face d'un deuxième siège 13.4 du deuxième ensemble 12.

En outre, le premier siège 13.1 et le deuxième siège 13.2 du premier ensemble 11 sont tournés vers l'intérieur en direction de l'axe longitudinal X2 de l'arrangement 10. Le premier siège 13.3 et le deuxième siège 13.4 du deuxième ensemble 12 sont tournés vers l'extérieur à l'opposé de l'axe longitudinal X2 de l'arrangement 10.

De préférence, les axes X1 des sièges 13.1, 13.2, 13.3, 13.4 forment sensiblement le même angle par rapport à l'axe longitudinal X2 de l'arrangement 10. Les axes X1 des sièges d'un même ensemble 11, 12 coupent l'axe longitudinal X2 de l'arrangement 10 sensiblement en un même point.

Ainsi, les axes X1 des sièges 13.1, 13.2 du premier ensemble 11 coupent l'axe longitudinal X2 à l'avant des sièges 13.1, 13.2 sensiblement en un même point; tandis que les axes X1 des sièges 13.3, 13.4 du deuxième ensemble 12 coupent l'axe longitudinal X2 à l'arrière des sièges 13.3, 13.4 sensiblement en un même point.

Alternativement, les axes X1 des sièges d'un même ensemble 11, 12 pourront être décalés l'un par rapport à l'autre selon l'axe longitudinal X2, de sorte que les axes des sièges d'un même ensemble 11, 12 coupent l'axe longitudinal X2 en des points différents.

Chaque siège 13.1, 13.2, 13.3, 13.4 est intégré dans un logement correspondant d'un module de base 15. Ce module de base 15 comporte un accoudoir 16 situé d'un côté du siège 13.1-13.4 et un coussin 17 situé de l'autre côté du siège 13.1-13.4. Le coussin 17 est de préférence un coussin de maximisation du couchage destiné à être positionné dans le prolongement du plan de couchage du siège 13.1-13.4 lorsque ce dernier se trouve en position allongée. L'accoudoir 16 pourra être un accoudoir escamotable entre une position relevée permettant au passager de poser ses coudes lorsque le siège correspondant 13.1-13.4 est en position assise et une position abaissée dans laquelle l'accoudoir 16 se situe dans le prolongement du siège 13.1-13.4 en position allongée.

Chaque siège 13.1-13.4 est également associé à une coque 20, visible notamment en figure 1b, positionnée autour de son dossier afin d'isoler le siège 13.1-13.4 d'un arrangement 10 voisin. Les coques 20 des sièges 13.1 et 13.2 (respectivement 13.3 et 13.4) d'un même ensemble 11 (respectivement 12) pourront être réalisées d'un seul tenant.

Dans le cas où plusieurs arrangements 10 sont positionnés les uns derrière les autres, le siège 13.1 (respectivement 13.2) du premier ensemble 11 et le siège 13.3 (respectivement 13.4) adjacent du deuxième ensemble 12 positionnés suivant la même colonne longitudinale pourront être obtenus à partir d'un module double 23. Comme cela est illustré sur la figure 2, le module double 23 comporte deux logements 24.1, 24.2 pour recevoir les siège 13.1 et 13.3 (respectivement 13.2 et 13.4) de telle façon que les sièges 13.1 et 13.3 (respectivement 13.2 et 13.4) sont tournés suivant deux directions opposées l'une par rapport à l'autre. Un des sièges 13.1 (respectivement 13.2) est tourné vers l'axe longitudinal X2, tandis que l'autre siège 13.3 (respectivement 13.4) est tourné vers l'extérieur de l'axe longitudinal X2. Les axes X1 des deux sièges 13.1 et 13.3 (respectivement 13.2 et 13.4) installés sur un même module 28 sont de préférence sensiblement parallèles l'un par rapport à l'autre. Une coque 20 s'étend entre les deux sièges 13.1 et 13.3 (respectivement 13.2 et 13.4) du module double 23. En outre, dans le module double 23, les dossiers des sièges 13.1 et 13.3 (respectivement 13.2 et 13.4) en position allongée se superposent au moins partiellement suivant la direction longitudinale Y.

Par ailleurs, l'arrangement 10 comporte une première console centrale 27.1 et une deuxième console centrale 27.2 positionnées entre le premier ensemble de sièges 11 et le deuxième ensemble de sièges 12. Les consoles centrales 27.1, 27.2 présentent chacune une face supérieure plane 28 sur laquelle le passager pourra notamment poser des objets.

La première console centrale 27.1 comporte une première zone de pieds 30.1 et une deuxième zone de pieds 30.2 ouvertes suivant deux directions opposées l'une par rapport à l'autre et associées respectivement au premier siège 13.1 du premier ensemble 11 et au premier siège 13.3 du deuxième ensemble 12. Ainsi, la zone de pieds 30.1 se situe dans le prolongement du premier siège 13.1 du premier ensemble 11 lorsque ce dernier se trouve en position allongée. La zone de pieds 30.2 opposée se situe dans le prolongement du premier siège 13.3 du deuxième ensemble 12 lorsque ce dernier se trouve en position allongée.

De façon analogue, la deuxième console centrale 27.2 comporte une première zone de pieds 30.3 et une deuxième zone de repose-pieds 30.4 ouvertes suivant deux directions opposées l'une par rapport à l'autre et associées respectivement au deuxième siège 13.2 du premier ensemble 11 et au deuxième siège 13.4 du deuxième ensemble 12. Ainsi, la zone de pieds 30.3 se situe dans le prolongement du deuxième siège 13.2 du premier ensemble 11 lorsque ce dernier se trouve en position allongée. La zone de pieds 30.4 opposée se situe dans le prolongement du deuxième siège 13.4 du deuxième ensemble 12 lorsque ce dernier se trouve en position allongée.

Dans chaque console centrale 27.1, 27.2, les zones de pieds 30.1 et 30.2 (respectivement 30.3 et 30.4) sont superposées au moins partiellement suivant l'axe longitudinal X2. Ainsi, il existe au moins une droite perpendiculaire à l'axe longitudinal X2 qui coupe les deux zones de pieds 30.1 et 30.2 (respectivement 30.3 et 30.4) d'une même console centrale 27.1 (respectivement 27.2). Plus précisément, les zones de pieds 30.1-30.4 sont constituées par des logements 31 ouverts en direction du siège 13.1-13.4 correspondant et un coussin 32 de repose-pieds sensiblement horizontal situé à l'intérieur du logement 31 et sur lequel le passager peut reposer ses pieds, tel que cela est montré sur la figure 1a.

Les logements 31 réalisés dans une console centrale 27.1, 27.2 sont délimités chacun par un fond 33, les fonds 33 des deux logements 31 ménagés dans une même consoles 27.1, 27.2 étant reliés entre eux par une paroi commune 34 inclinée par rapport à l'axe longitudinal X2.

Afin de présenter un caractère modulaire, les consoles centrales 27.1, 27.2 sont avantageusement indépendantes l'une de l'autre. En variante, les consoles 27.1, 27.2 pourront toutefois être réalisées de façon monobloc de manière à ne former qu'une seule pièce.

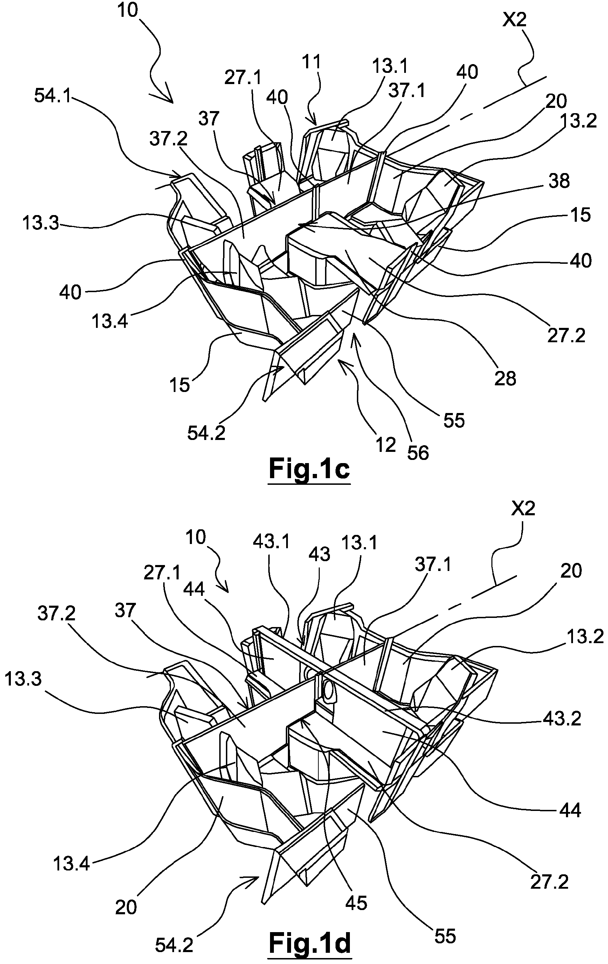

Par ailleurs, une cloison centrale 37 s'étend suivant l'axe longitudinal X2 pour séparer entre eux les sièges 13.1, 13.2 (respectivement 13.3 et 13.4) d'un même ensemble 11, 12. Comme cela est illustré par la figure 1c, une telle configuration permet de créer deux modules de sièges face à face, à savoir un premier module formé par les sièges 13.1 et 13.3, et un deuxième module formé par les sièges 13.2 et 13.4. Comme cela est expliqué plus en détails ci-après, ce sont ces modules de sièges face à face qui pourront être répétés dans les groupes latéraux 62 de sièges dans la cabine d'avion, tel que cela est illustré par les figures 5a et 5b notamment.

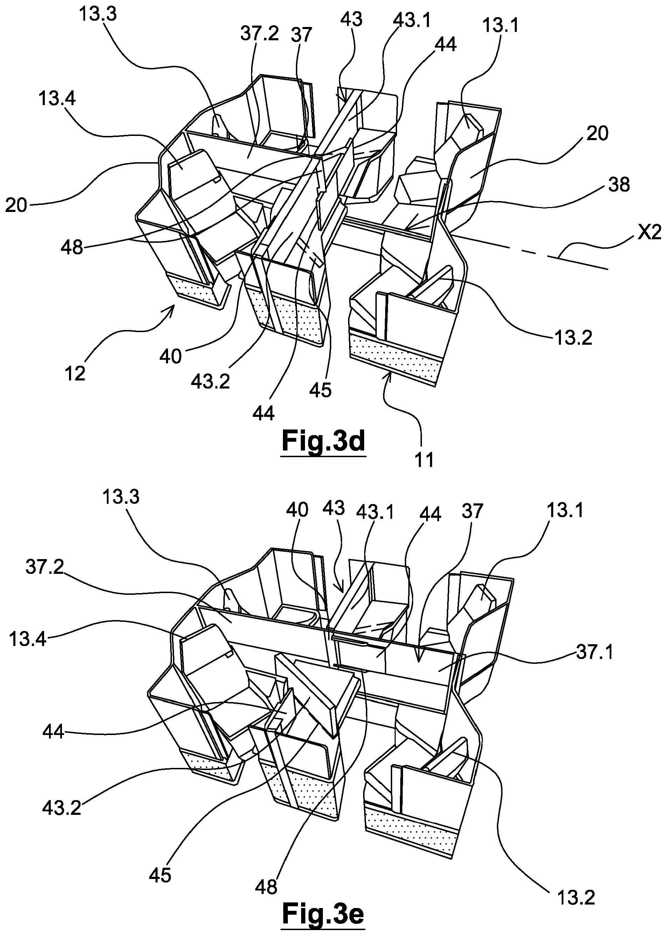

La cloison centrale 37 est avantageusement escamotable entre une position déployée et une position rangée. En position rangée, ladite cloison centrale 37 est logée au moins partiellement dans un espace 38 entre les deux consoles 27.1, 27.2 centrales, tel que cela est illustré par la figure 3d.

La cloison centrale 37 est réalisée en une seule ou en deux parties 37.1, 37.2 pour isoler indépendamment les sièges 13.1 et 13.2 (respectivement 13.3 et 13.4) côte à côte des deux ensembles de sièges 11, 12.

Dans un mode de réalisation particulier, la cloison centrale 37 est reliée mécaniquement à des mâts 40. En effet, l'arrangement 10 comportent des mâts 40 creux s'étendant verticalement pour autoriser le passage de faisceaux électriques acheminant notamment des signaux de puissance et de données pour des systèmes multimédia associés aux sièges 13.1-13.4. Il sera ainsi possible de tirer profit de la présence de ces mâts 40 pour les utiliser comme support de fixation de la cloison centrale 37 et des autres cloisons de l'arrangement 10 comme cela est expliqué ci-après.

A cet effet, les mâts 40 portant la cloison centrale 37 pourront comporter des glissières pour autoriser un déplacement de chaque partie 37.1, 37.2 de la cloison 37 suivant une direction verticale pour passer d'une position à l'autre. En variante, le déplacement de la cloison centrale 37 pourra être un déplacement latéral ou une rotation ou une combinaison de ces déplacements.

Par ailleurs, une cloison transversale 43 s'étend suivant une direction perpendiculaire à l'axe longitudinal X2 de l'arrangement 10 pour séparer entre eux les deux ensembles de sièges 11 et 12.

Dans le mode de réalisation de la figure 1d, la cloison transversale 43 porte des écrans 44 associés chacun à un siège 13.1-13.4 de l'arrangement 10. La cloison transversale 43 porte ainsi deux écrans 44 sur chacune de ses faces. Comme précédemment, les mâts 40 pourront servir de structure de support pour la cloison transversale 43. Dans certaines configurations, la cloison transversale 43 pourra comporter des formes pour recouvrir et masquer les mâts 40.

La cloison transversale 43 est de préférence réalisée en deux parties 43.1, 43.2 qui pourront être escamotables entre une position déployée correspondant à la position montrée sur la figure 3d et une position rangée.

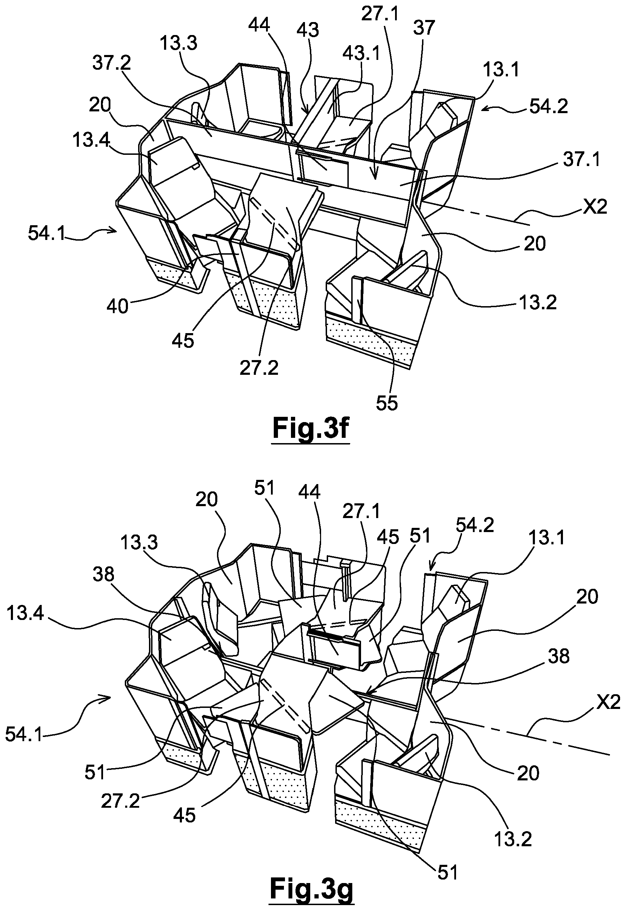

Comme cela est illustré par la figure 3f, dans la position rangée, chaque partie 43.1, 43.2 de la cloison transversale 43 est logée au moins partiellement dans un espace 45 ménagé dans la console centrale 27.1, 27.2 correspondante. Afin de passer d'une position à l'autre, chaque partie 43.1, 43.2 de la cloison 43 est mobile en rotation suivant un axe vertical et est apte à coulisser suivant cet axe.

En effet, l'espace 45 recevant une partie correspondante étant incliné par rapport à la direction d'extension de la cloison transversale 43 en position déployée, il est tout d'abord nécessaire de la faire tourner autour d'un axe vertical pour aligner la partie 43.1, 43.2 de la cloison 43 avec l'espace de rangement 45 correspondant, tel que cela est illustré par la figure 3e, puis de pousser la partie 43.1, 43.2 vers le bas suivant la direction verticale afin de la faire pénétrer à l'intérieur de l'espace de rangement 45, tel que cela est illustré par la figure 3f.

Dans le cas où la longueur de l'espace de rangement 45 est inférieure à celle de la partie 43.1, 43.2 de la cloison 43 correspondante lorsque cette dernière se trouve en position déployée, il sera possible d'utiliser une cloison transversale 43 télescopique.

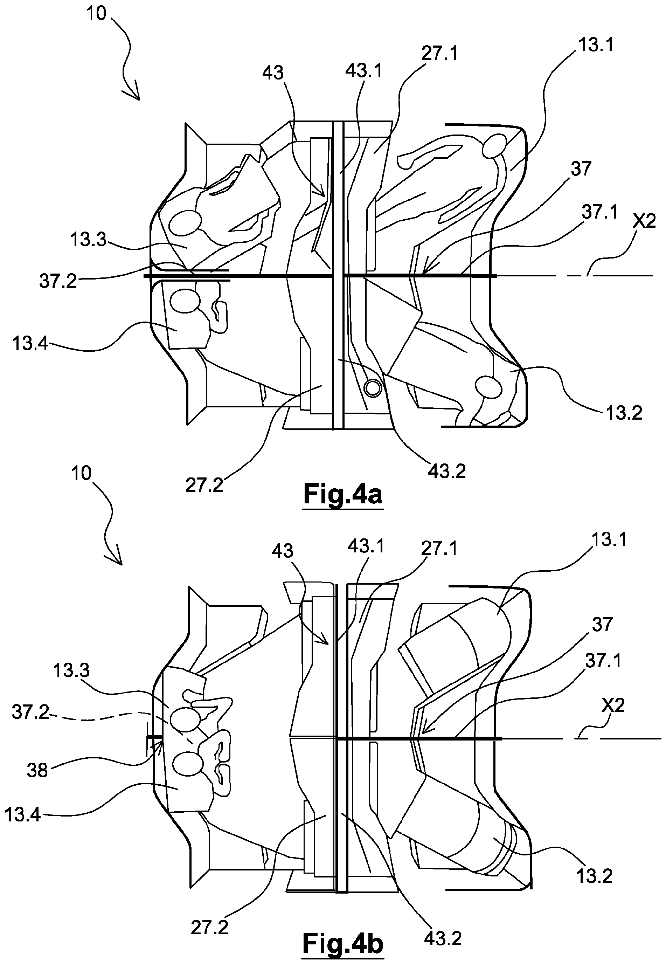

Comme cela est illustré par les figures 4a à 4f, l'arrangement 10 procure une grande modularité permettant de proposer plusieurs aménagements confortables pour les passagers.

Ainsi, dans un mode dit "solo" représenté sur la figure 4a, il est possible d'isoler chaque passager en déployant l'ensemble des cloisons centrale 37 et transversale 43.

Dans un mode dit "double" représenté sur la figure 4b, il est possible de faire communiquer deux passagers placés côte à côte dans une configuration de sièges en chevron inversé en escamotant la partie 37.2 de la paroi centrale 37.

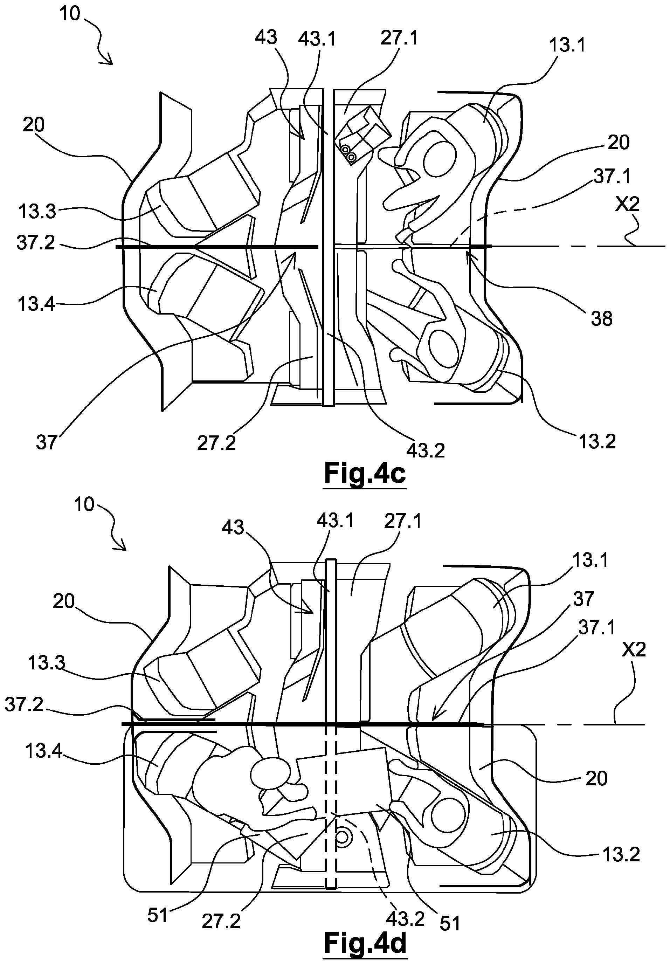

Dans un mode dit "pair" représenté sur la figure 4c, il est possible de faire communiquer deux passagers placés côte à côte dans une configuration de sièges en chevron en escamotant l'autre partie 37.1 de la paroi centrale 37.

Dans un mode dit "twin" représenté sur la figure 4d, il est possible de faire communiquer deux passagers placés l'un en face de l'autre en escamotant une partie 43.2 de la paroi transversale 43.

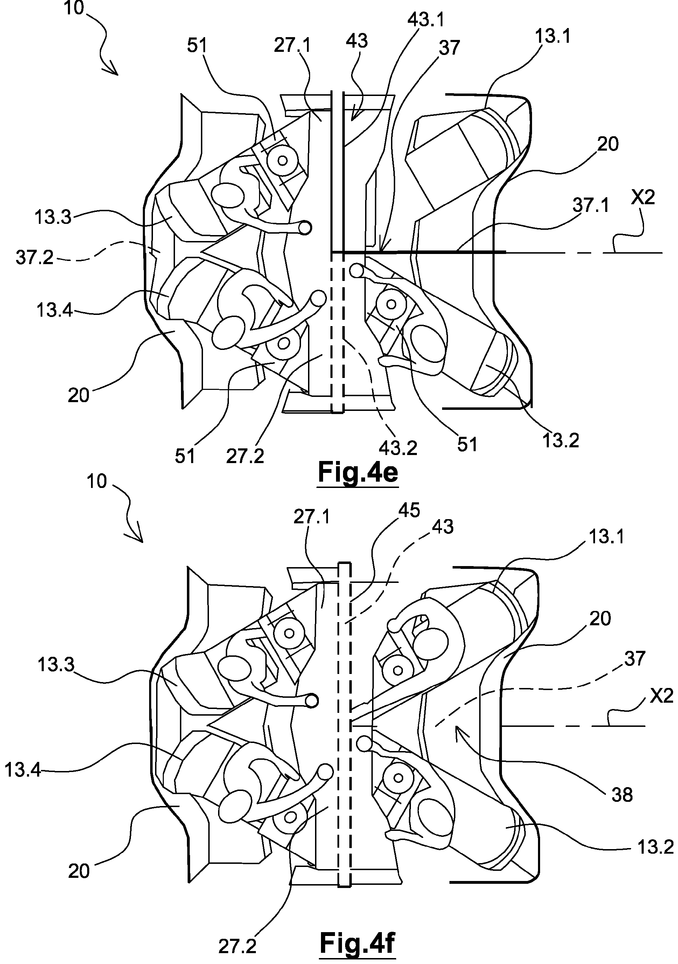

Dans un mode dit "trio" représenté sur la figure 4e, il est possible de faire communiquer trois passagers en escamotant la partie 43.2 de la paroi transversale 43 ainsi que la partie 37.2 de la paroi centrale 37.

Dans un mode dit "quad" représenté sur la figure 4f, il est possible de faire communiquer les quatre passagers de l'arrangement en escamotant complètement la paroi centrale 37 ainsi que la paroi transversale 43.

Comme cela a été précédemment indiqué, il est possible d'utiliser des écrans 44 portés par la cloison transversale 43. Cela correspond au mode de réalisation cinéma des figures 1a à 1d.

En variante, dans le mode de réalisation de type "bureau" des figures 3a à 3g, on prévoit des supports 48 portant des écrans 44. Chaque support 48 est monté rotatif par rapport à un mât 40 correspondant et ledit écran 44 est monté rotatif par rapport audit support 48.

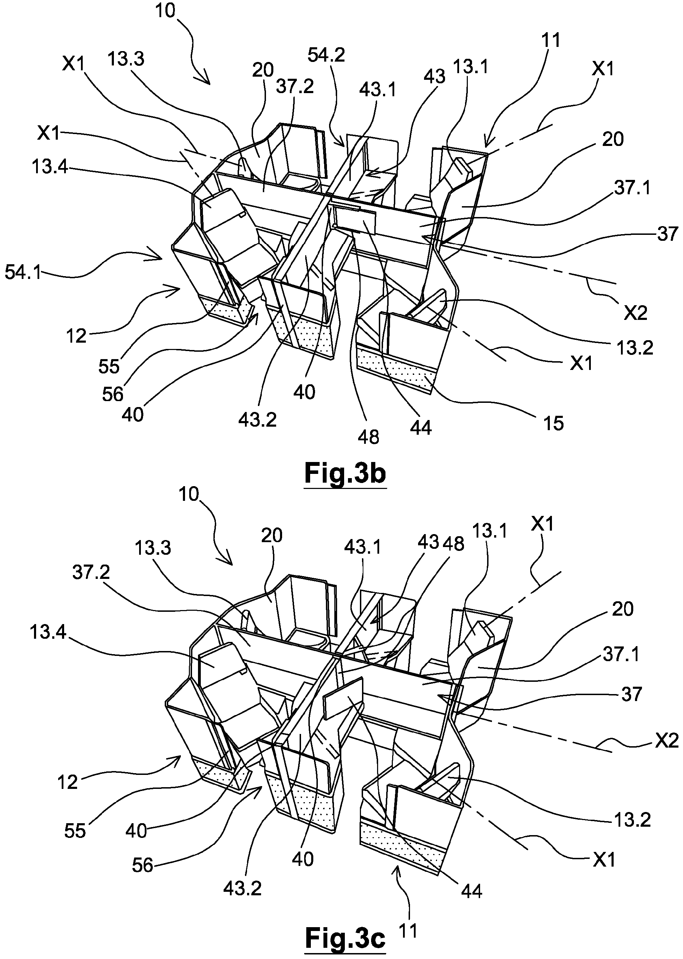

Afin de passer d'une position rangée de l'écran 44 à une position d'utilisation, il suffit de faire tourner le support 48 en direction du siège 13.1-13.4 correspondant tel que cela est illustré par la figure 3c, puis de faire tourner l'écran 44 sur son support 48 afin d'orienter l'écran 44 dans la direction souhaitée. Des opérations inverses permettent de faire passer l'écran 44 de la position d'utilisation à la position rangée dans laquelle l'écran 44 s'étend dans un plan sensiblement parallèle à la paroi 37, tel que cela est montré en figure 3e.

Il sera également possible de prévoir des tablettes 51 associées chacune à un siège 13.1-13.4. Chaque tablette 51 est mobile par rapport à une console centrale 27.1-27.2 correspondante entre une position d'utilisation dans laquelle la tablette 51 fait saillie par rapport à la console 27.1, 27.2 tout en se situant dans le prolongement de la face supérieure 28 de la console 27.1, 27.2 correspondante, tel que cela est illustré par la figure 3g, et une position rangée dans laquelle la tablette 51 est stockée dans un logement interne de la console centrale 27.1, 27.2 correspondante, tel que cela est illustré par la figure 3f.

Comme on peut le voir notamment sur les figures 1b et 3b, l'arrangement 10 comporte deux cloisons latérales 54.1, 54.2 s'étendant chacune le long d'un couloir de circulation. Chaque cloison latérale 54.1, 54.2 comporte des moyens de fermeture 55 d'un passage 56 entre le siège 13.1-13.4 et la console centrale 27.1, 27.2 correspondante. Les moyens de fermeture 55 pourront par exemple consister en une porte montée mobile en translation entre deux pans de la cloison 54.1, 54.2 ou en une porte montée rotative autour d'une charnière. Avantageusement, les cloisons latérales 54.1, 54.2 sont portées par des mâts 40 correspondants.

Il ressort de ce qui précède, que pour passer de la configuration "cinéma" des figures 1a à 1d à la configuration "bureau" des figures 3a à 3g, les modules de base 15, les consoles centrales 27.1, 27.2, ainsi que les coques 20 ont été conservés et seules les parties supérieures de l'arrangement 10 (cloison centrale 37, cloison transversale 43, supports d'écran 48) ont été modifiées pour adapter l'arrangement 10 aux spécificités de la configuration imposées par la compagnie aérienne. On dispose ainsi d'une grande modularité dans la conception des configurations de sièges qui sont obtenues à partir d'éléments communs élémentaires (modules de base 15, consoles centrales 27.1, 27.2, et coques 20).

Les figures 5a à 5j montrent différentes configuration de cabine d'avion 59 pouvant être réalisées. Ces configurations sont formées par un groupe central de sièges 61 et deux groupes latéraux de sièges 62 situés de part et d'autre du groupe central 61. En l'occurrence, les deux groupes latéraux de sièges 62 sont proches des parois de l'avion 64.

Le groupe central 61 est séparé de chacun des groupes latéraux 62 par un couloir de circulation 63.

Dans le mode de réalisation de la figure 5a, la cabine 59 présente 28 places de passagers. Le groupe central 61 comporte une répétition de l'arrangement 10 à quatre sièges 13.1-13.4 selon l'invention. A ses extrémités, le groupe central 61 comporte deux ensembles d'extrémité de deux sièges 65 dans lesquels les sièges 13 sont tournés à l'opposé de l'axe X3 de la cabine 59 (agencement en "chevron inversé" ou "reverse herringbone" en anglais).

Les groupes latéraux 62 sont formés notamment par une répétition de modules à deux sièges 13.1 et 13.3 (respectivement 13.2 et 13.4) associé à une console centrale 27.1 (respectivement 27.2), ce qui correspond à une répétition d'un demi-arrangement 10.

Le mode de réalisation de la figure 5b est analogue à celui de la figure 5a sauf que les ensembles d'extrémité 65 présentent des sièges 13 tournés vers l'intérieur en direction de l'axe X1 (agencement en "chevron" ou "herringbone" en anglais).

Dans le mode de réalisation de la figure 5c, le groupe central 61 commence avec un arrangement 10 à quatre sièges 13.1-13.4 selon l'invention et se poursuit par des agencements en chevron, ce qui permet d'économiser de l'espace en évitant d'avoir à implanter un module 66 intégrant les zones de pieds comme cela était le cas pour les deux configurations précédentes des figures 5a et 5b. Par ailleurs, les groupes latéraux 62 sont formés chacun par une colonne de sièges 13 tournés vers la paroi 64 le long de laquelle s'étend ladite colonne.

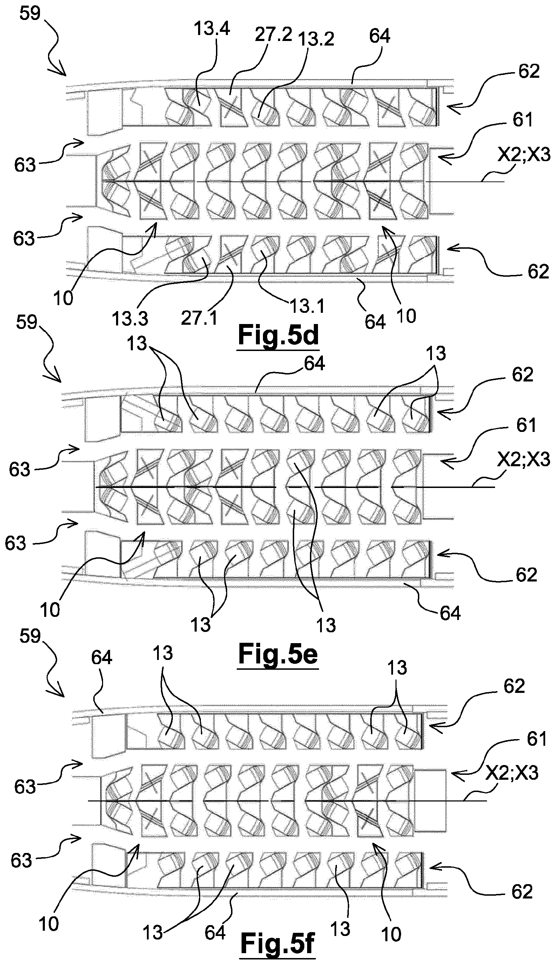

Dans le mode de réalisation de la figure 5d à 30 places, les arrangements 10 de quatre sièges 13.1-13.4 sont implantés au début ainsi qu'à la fin du groupe central de sièges 61. Les groupes latéraux 62 comportent des ensembles de deux sièges 13.1 et 13.3 (respectivement 13.2 et 13.4) associés à une console centrale 27.1 (respectivement 27.2).

Dans le mode de réalisation de la figure 5e à 32 places, l'arrangement 10 de quatre sièges 13.1-13.4 est répété deux fois au début du groupe central 61. Les groupes latéraux 62 sont formés chacun par une colonne de sièges 13 tournés vers la paroi 64 le long de laquelle s'étend ladite colonne.

Le mode de réalisation de la figure 5f est analogue à celui de la figure 5e, sauf que les arrangements 10 de quatre sièges 13.1-13.4 sont implantés au début et à la fin du groupe central 61.

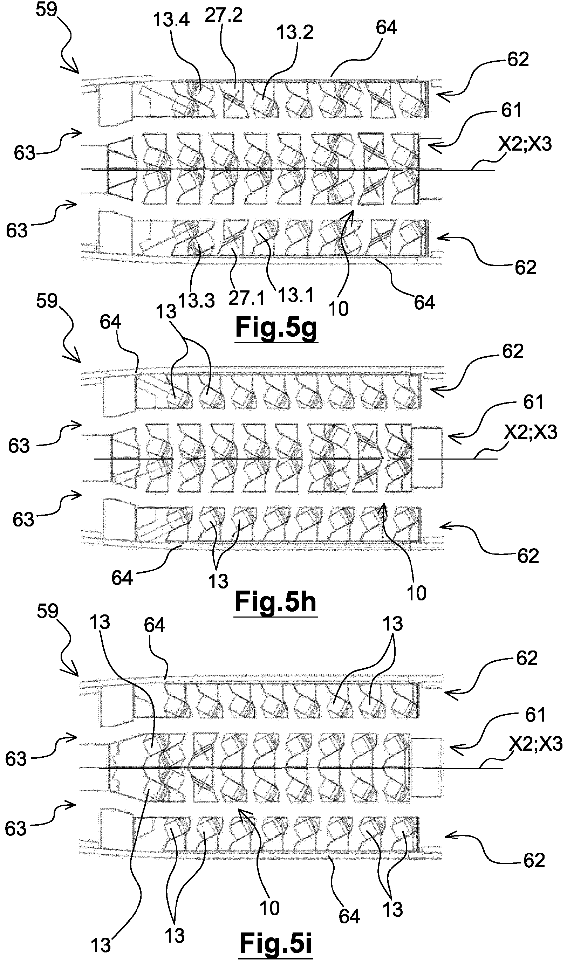

Dans le mode de réalisation de la figure 5g à 30 places, l'arrangement 10 de quatre sièges 13.1-13.4 est implanté à la fin du groupe central 61, le reste des sièges 13 présentant une configuration en chevron inversé. Les groupes latéraux 62 comportent des ensembles de deux sièges 13.1 et 13.3 (respectivement 13.2 et 13.4) associés à une console centrale 27.1 (respectivement 27.2).

Dans le mode de réalisation de la figure 5h à 32 places, l'arrangement 10 de quatre sièges 13.1-13.4 est implanté à la fin du groupe central 61, le reste des sièges 13 présentant une configuration en chevron inversé. Les groupes latéraux 62 sont formés par des sièges 13 configurés en chevron avec des angles d'inclinaison différents.

Dans le mode de réalisation de la figure 5i à 32 places, l'arrangement 10 de quatre sièges 13.1-13.4 est implanté dans le groupe central 61 derrière un ensemble de sièges 13 configurés en chevron. Les groupes latéraux 62 sont formés chacun par une colonne de sièges 13 tournés vers la paroi 64 le long de laquelle s'étend ladite colonne.

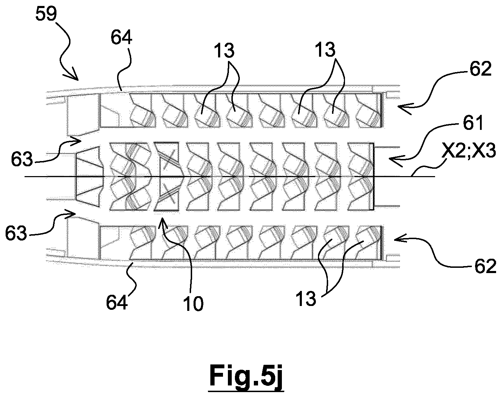

Dans le mode de réalisation de la figure 5j à 32 places, l'arrangement 10 de quatre sièges 13.1-13.4 est implanté dans le groupe central 61 derrière un ensemble de sièges 13 configurés en chevron inversé. Les groupes latéraux 62 sont formés chacun par une colonne de sièges 13 tournés vers la paroi 64 le long de laquelle s'étend ladite colonne.

L'invention pourra également être mise en œuvre avec des sièges installés dans d'autres moyens de transport, comme par exemple des sièges de bus, de trains, ou de bateaux.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de fonctionnement décrits précédemment, pouvant être pris séparément ou en association.

## Revendications

1. Arrangement (10) de sièges individuels destiné à être installé dans une cabine d'avion (59) comportant un premier ensemble (11) de deux sièges (13.1, 13.2) et un deuxième ensemble (12) de deux sièges (13.3, 13.4), chaque siège (13.1, 13.2, 13.3, 13.4) présentant un axe (X1) et étant convertible entre une position assise et une position allongée, ledit arrangement (10) présentant un axe longitudinal (X2), **caractérisé en ce que**:
- un premier siège (13.1) du premier ensemble (11) est positionné en face d'un premier siège (13.3) du deuxième ensemble (12),
- un deuxième siège (13.2) du premier ensemble (11) est positionné en face d'un deuxième siège (13.4) du deuxième ensemble (12),
- le premier siège (13.1) et le deuxième siège (13.2) du premier ensemble (11) étant tournés vers l'intérieur en direction de l'axe longitudinal (X2) de l'arrangement (10),
- le premier siège (13.3) et le deuxième siège (13.4) du deuxième ensemble (12) étant tournés vers l'extérieur à l'opposé de l'axe longitudinal (X2) de l'arrangement (10),
et **en ce que** l'arrangement (10) comporte en outre:
- une première console centrale (27.1) et une deuxième console centrale (27.2) positionnées entre le premier ensemble (11) de sièges (13.1, 13.2) et le deuxième ensemble (12) de sièges (13.3, 13.4),
- la première console centrale (27.1) comportant une première zone de pieds (30.1) et une deuxième zone de pieds (30.2) ouvertes suivant deux directions opposées l'une par rapport à l'autre et associées respectivement au premier siège (13.1) du premier ensemble (11) et au premier siège (13.3) du deuxième ensemble (12),
- la deuxième console centrale (27.2) comportant une première zone de pieds (30.3) et une deuxième zone de pieds (30.4) ouvertes suivant deux directions opposées l'une par rapport à l'autre et associées respectivement au deuxième siège (13.2) du premier ensemble (11) et au deuxième siège (13.4) du deuxième ensemble (12).

2. Arrangement (10) selon la revendication 1, **caractérisé en ce que**, dans chaque console centrale (27.1, 27.2), les zones de pieds (30.1-30.4) sont superposées au moins partiellement suivant l'axe longitudinal (X2) de l'arrangement.

3. Arrangement (10) selon la revendication 1 ou 2, **caractérisé en ce qu'**il comporte une cloison centrale (37) s'étendant suivant l'axe longitudinal (X2) pour séparer entre eux les sièges (13.1, 13.2; 13.3, 13.4) d'un même ensemble (11, 12).

4. Arrangement (10) selon la revendication 3, **caractérisé en ce que** la cloison centrale (37) est escamotable entre une position déployée et une position rangée.

5. Arrangement (10) selon la revendication 4, **caractérisé en ce que**, en position rangée, la cloison centrale (37) est logée au moins partiellement dans un espace (38) entre les deux consoles centrales (27.1, 27.2).

6. Arrangement (10) selon la revendication 4 ou 5, **caractérisé en ce que** la cloison centrale (37) est réalisée en une seule partie.

7. Arrangement (10) selon l'une quelconque des revendications 4 à 6, **caractérisé en ce que** la cloison centrale (37) est réalisée en deux parties (37.1, 37.2) pour isoler les sièges (13.1, 13.2; 13.3, 13.4) côte à côte des deux ensembles de sièges (11, 12).

8. Arrangement (10) selon l'une quelconque des revendications 4 à 7, **caractérisé en ce que** ladite cloison centrale (37) est reliée mécaniquement à des mâts (40) de l'arrangement.

9. Arrangement (10) selon l'une quelconque des revendications 1 à 8, **caractérisé en ce qu'**il comporte en outre une cloison transversale (43) s'étendant suivant une direction perpendiculaire à l'axe longitudinal (X2) dudit arrangement (10) pour isoler le premier ensemble de sièges (11) par rapport au deuxième ensemble de sièges (12).

10. Arrangement (10) selon la revendication 9, **caractérisé en ce que** la cloison transversale (43) est réalisée en deux parties (43.1, 43.2) escamotables entre une position déployée et une position rangée, lesdites deux parties permettant de séparer indépendamment les premiers sièges de chaque ensemble (11, 12) ou les deuxièmes sièges de chaque ensemble (11, 12).

11. Arrangement (10) selon la revendication 10, **caractérisé en ce que**, dans la position rangée, chaque partie (43.1, 43.2) de la cloison transversale (43) est logée au moins partiellement dans un espace (45) ménagé dans une console centrale (27.1, 27.2) correspondante.

12. Arrangement (10) selon l'une quelconque des revendications 9 à 11, **caractérisé en ce que** la cloison transversale (43) porte des écrans (44) associés chacun à un siège (13.1, 13.2, 13.3, 13.4) dudit arrangement (10).

13. Arrangement (10) selon l'une quelconque des revendications 1 à 12, **caractérisé en ce qu'**il comporte en outre au moins un support (48) portant un écran (44), ledit support (48) étant monté rotatif par rapport à un mât (40) et ledit écran (44) étant monté rotatif par rapport audit support (48).

14. Arrangement (10) selon l'une quelconque des revendications 1 à 13, **caractérisé en ce qu'**il comporte au moins une cloison latérale (54.1, 54.2) s'étendant le long d'un couloir de circulation (63), ladite cloison latérale (54.1, 54.2) comportant des moyens de fermeture (55) d'un passage (56) entre le siège (13.1, 13.2, 13.3, 13.4) et la console centrale (27.1, 27.2) correspondante.

15. Arrangement (10) selon la revendication 14, **caractérisé en ce que** la cloison latérale (54.1, 54.2) est portée par des mâts (40).

16. Arrangement (10) selon la revendication 15, **caractérisé en ce que** les mâts (40) sont creux pour autoriser le passage de faisceaux électriques acheminant notamment des signaux de puissance et de données pour des systèmes multimédia associés aux sièges (13.1, 13.2, 13.3, 13.4).

17. Arrangement (10) selon l'une quelconque des revendications 1 à 16, **caractérisé en ce que** chaque siège (13.1, 13.2, 13.3, 13.4) est associé à une coque (20) positionnée autour de dossiers des sièges (13.1, 13.2, 13.3, 13.4).

18. Cabine d'avion (59) comportant:
- un groupe central de sièges (61) et
- deux groupes latéraux de sièges (62) situés de part et d'autre du groupe central de sièges (61),
- chaque groupe latéral de sièges (62) étant séparé du groupe central (61) par un couloir de circulation (63),
**caractérisé en ce que** le groupe central (61) comporte au moins un arrangement (10) de quatre sièges (13.1, 13.2, 13.3, 13.4) tel que défini selon l'une quelconque des revendications précédentes.

19. Cabine d'avion (59) selon la revendication 18, **caractérisé en ce que** le au moins un arrangement (10) de quatre sièges (13.1, 13.2, 13.3, 13.4) est implanté à une extrémité du groupe central de sièges (61).

20. Cabine d'avion (59) selon la revendication 18 ou 19, **caractérisé en ce que** les groupes latéraux (62) sont formés notamment par une répétition de modules de deux sièges (13.1, 13.3 ou 13.2-13.4) associés à une console centrale (27.1; 27.2).

## Patentansprüche

1. Anordnung (10) einzelner Sitze, die in eine Flugzeugkabine (59) eingebaut werden sollen, und eine erste Baugruppe (11) von zwei Sitzen (13.1, 13.2) und eine zweite Baugruppe (12) von zwei Sitzen (13.3, 13.4) umfassen, wobei jeder Sitz (13.1, 13.2, 13.3, 13.4) eine Achse (X1) aufweist, und zwischen einer Sitzposition und einer Liegeposition umwandelbar ist, wobei die Anordnung (10) eine Längsachse (X2) aufweist, **dadurch gekennzeichnet, dass**:
- ein erster Sitz (13.1) der ersten Baugruppe (11) gegenüber einem ersten Sitz (13.3) der zweiten Baugruppe (12) positioniert ist,
- ein zweiter Sitz (13.2) der ersten Baugruppe (11) gegenüber einem zweiten Sitz (13.4) der zweiten Baugruppe (12) positioniert ist,
- der erste Sitz (13.1) und der zweite Sitz (13.2) der ersten Baugruppe (11) in Richtung der Längsachse (X2) der Anordnung (10) nach innen gerichtet sind,
- der erste Sitz (13.3) und der zweite Sitz (13.4) der zweiten Baugruppe (12) entgegen der Längsachse (X2) der Anordnung (10) nach außen gerichtet sind,
und dass die Anordnung (10) ferner umfasst:
- eine erste Mittelkonsole (27.1) und eine zweite Mittelkonsole (27.2), die zwischen der ersten Baugruppe (11) von Sitzen (13.1, 13.2) und der zweiten Baugruppe (12) von Sitzen (13.3, 13.4) positioniert sind, wobei
- die erste Mittelkonsole (27.1) eine erste Fußzone (30.1) und eine zweite Fußzone (30.2) umfasst, welche in zwei entgegengesetzten Richtungen offen sind, und jeweils dem ersten Sitz (13.1) der ersten Baugruppe (11) und dem ersten Sitz (13.3) der zweiten Baugruppe (12) zugeordnet sind,
- die zweite Mittelkonsole (27.2) eine erste Fußzone (30.3) und eine zweite Fußzone (30.4) umfasst, welche in zwei entgegengesetzten Richtungen offen sind, und jeweils dem zweiten Sitz (13.2) der ersten Baugruppe (11) und dem zweiten Sitz (13.4) der zweiten Baugruppe (12) zugeordnet sind.

2. Anordnung (10) nach Anspruch 1, **dadurch gekennzeichnet, dass** in jeder Mittelkonsole (27.1, 27.2) die Fußzonen (30.1-30.4) zumindest teilweise entlang der Längsachse (X2) der Anordnung überlagert sind.

3. Anordnung (10) nach Anspruch 1 oder 2, **dadurch gekennzeichnet, dass** sie eine zentrale Trennwand (37) aufweist, die sich entlang der Längsachse (X2) erstreckt, um die Sitze (13.1, 13.2; 13.3, 13.4) des gleiche Baugruppe (11, 12) voneinander zu trennen.

4. Anordnung (10) nach Anspruch 3, **dadurch gekennzeichnet, dass** die zentrale Trennwand (37) zwischen einer ausgefahrenen Position und einer eingezogenen Position einziehbar ist.

5. Anordnung (10) nach Anspruch 4, **dadurch gekennzeichnet, dass** in der eingezogenen Position die zentrale Trennwand (37) zumindest teilweise in einem Raum (38) zwischen den beiden zentralen Konsolen (27.1, 27.2) untergebracht ist.

6. Anordnung (10) nach Anspruch 4 oder 5, **dadurch gekennzeichnet, dass** die zentrale Trennwand (37) aus einem Teil besteht.

7. Anordnung (10) nach einem der Ansprüche 4 bis 6, **dadurch gekennzeichnet, dass** die zentrale Trennwand (37) aus zwei Teilen (37.1, 37.2) besteht, um die benachbarten Sitze (13.1, 13.2; 13.3, 13.4) der beiden Sitzbaugruppen (11, 12) zu isolieren.

8. Anordnung (10) nach einem der Ansprüche 4 bis 7, **gekennzeichnet dadurch, dass** die zentrale Trennwand (37) mechanisch mit Streben (40) der Anordnung verbunden ist.

9. Anordnung (10) nach einem der Ansprüche 1 bis 8, **dadurch gekennzeichnet, dass** sie ferner eine Quertrennwand (43) umfasst, die sich entlang einer Richtung senkrecht zur Längsachse (X2) der Anordnung (10) erstreckt, so dass die erste Sitzbaugruppe (11) von der zweiten Sitzbaugruppe (12) zu isolieren.

10. Anordnung (10) nach Anspruch 9, **dadurch gekennzeichnet, dass** die Quertrennwand (43) aus zwei Teilen (43.1, 43.2) besteht, die zwischen einer ausgefahrenen Position und einer eingezogenen Position einziehbar sind, wobei die beiden Teile die Trennung der ersten Sitze jeder Baugruppe (11, 12) oder der zweiten Sitze jeder Baugruppe (11, 12) unabhängig voneinander ermöglichen.

11. Anordnung (10) nach Anspruch 10, **dadurch gekennzeichnet, dass** in der eingezogenen Position jeder Teil (43.1, 43.2) der Quertrennwand (43) zumindest teilweise in einem Raum (45) in einer entsprechenden Mittelkonsole (27.1, 27.2) untergebracht ist.

12. Anordnung (10) nach einem der Ansprüche 9 bis 11, **dadurch gekennzeichnet, dass** die Quertrennwand (43) Bildschirme (44) trägt, die jeweils einem Sitz (13.1, 13.2, 13.3, 13.4) der Anordnung (10) zugeordnet sind.

13. Anordnung (10) nach einem der Ansprüche 1 bis 12, **gekennzeichnet dadurch, dass** sie ferner mindestens einen Träger (48) für einen Bildschirm (44) aufweist, wobei der Träger (48) relativ zu einer Strebe (40) drehbar montiert ist, und der Bildschirm (44) relativ zu dem Träger (48) drehbar montiert ist.

14. Anordnung (10) nach einem der Ansprüche 1 bis 13, **dadurch gekennzeichnet, dass** sie mindestens eine seitliche Trennwand (54.1, 54.2) umfasst, die sich entlang eines Zirkulationskorridors (63) erstreckt, wobei die seitliche Trennwand (54.1, 54.2) Mittel (55) zum Schließen eines Durchgangs (56) zwischen dem Sitz (13.1, 13.2, 13.3, 13.4) und der entsprechenden Mittelkonsole (27.1, 27.2) umfasst.

15. Anordnung (10) nach Anspruch 14, **dadurch gekennzeichnet, dass** die seitliche Trennwand (54.1, 54.2) von Streben (40) getragen wird.

16. Anordnung (10) nach Anspruch 15, **dadurch gekennzeichnet, dass** die Streben (40) hohl sind, um den Durchgang von elektrischen Bündeln zu ermöglichen, die insbesondere Leistungs- und Datensignale für den Sitzen (13.1, 13.2, 13.3, 13.4) zugeordneten Multimediasysteme übertragen.

17. Anordnung (10) nach einem der Ansprüche 1 bis 16, **dadurch gekennzeichnet, dass** jedem Sitz (13.1, 13.2, 13.3, 13.4) eine Schale (20) zugeordnet ist, die um die Rückenlehnen (13.1, 13.2 13.3, 13.4) positioniert ist.

18. Flugzeugkabine (59), umfassend:
- eine zentrale Sitzgruppe (61) und
- zwei seitliche Sitzgruppen (62) zu beiden Seiten der mittleren Sitzgruppe (61),
- jede seitliche Sitzgruppe (62) durch einen Gang (63) von der zentralen Gruppe (61) getrennt wird,
**dadurch gekennzeichnet, dass** die zentrale Gruppe (61) mindestens eine Anordnung (10) von vier Sitzen (13.1, 13.2, 13.3, 13.4) nach einem der vorhergehenden Ansprüche umfasst.

19. Flugzeugkabine (59) nach Anspruch 18, **dadurch gekennzeichnet, dass** sich die mindestens eine Anordnung (10) von vier Sitzen (13.1, 13.2, 13.3, 13.4) an einem Ende der zentralen Sitzgruppe (61) befindet.

20. Flugzeugkabine (59) nach Anspruch 18 oder 19, **dadurch gekennzeichnet, dass** die seitlichen Gruppen (62) insbesondere aus einer Wiederholung von einer Mittelkonsole (27.1; 27.2) zugeordneten Modulen von zwei Sitzen (13.1, 13.3 oder 13.2-13.4) bestehen.

## Claims

1. An arrangement (10) of individual seats to be installed in an aircraft cabin (59) and comprising a first assembly (11) of two seats (13.1, 13.2) and a second assembly (12) of two seats (13.3, 13.4), each seat (13.1, 13.2, 13.3, 13.4) having an axis (X1) and being convertible between a sitting position and a lying position, said arrangement (10) having a longitudinal axis (X2), **characterized in that**:
- a first seat (13.1) of the first assembly (11) is facing a first seat (13.3) of the second assembly (12),
- a second seat (13.2) of the first assembly (11) is facing a second seat (13.4) of the second assembly (12),
- the first seat (13.1) and the second seat (13.2) of the first assembly (11) being oriented inward in the direction of the longitudinal axis (X2) of the arrangement (10),
- the first seat (13.3) and the second seat (13.4) of the second assembly (12) being oriented outwardly opposite the longitudinal axis (X2) of the arrangement (10),
and **in that** the arrangement (10) further comprises:
- a first central console (27.1) and a second central console (27.2) positioned between the first assembly (11) of seats (13.1, 13.2) and the second assembly (12) of seats (13.3, 13.4),
- the first central console (27.1) comprising a first foot zone (30.1) and a second foot zone (30.2), which are open along two directions opposite to each other and respectively associated with the first seat (13.1) of the first assembly (11) and the first seat (13.3) of the second assembly (12),
- the second central console (27.2) comprising a first foot zone (30.3) and a second foot zone (30.4), which are open along two directions opposite to each other and respectively associated with the second seat (13.2) of the first assembly (11) and the second seat (13.4) of the second assembly (12).

2. The arrangement (10) according to claim 1, **characterized in that**, in each central console (27.1, 27.2), the foot zones (30.1-30.4) are at least partially superimposed along the longitudinal axis (X2) of the arrangement.

3. The arrangement (10) according to claim 1 or 2, **characterized in that** it comprises a central partition (37) extending along the longitudinal axis (X2) so as to separate the seats (13.1, 13.2; 13.3, 13.4) of the same assembly (11, 12) from one another.

4. The arrangement (10) according to claim 3, **characterized in that** the central partition (37) is retractable between an extended position and a stored position.

5. The arrangement (10) according to claim 4, **characterized in that**, in the stored position, the central partition (37) is at least partially housed in a space (38) between the two central consoles (27.1, 27.2).

6. The arrangement (10) according to claim 4 or 5, **characterized in that** the central partition (37) is made in one part.

7. The arrangement (10) according to any one of the claims 4 to 6, **characterized in that** the central partition (37) is made in two parts (37.1, 37.2) so as to isolate the adjacent seats (13.1, 13.2; 13.3, 13.4) of the two assemblies of seats (11, 12).

8. The arrangement (10) according to any one of the claims 4 to 7, **characterized in that** said central partition (37) is mechanically connected to struts (40) of the arrangement.

9. The arrangement (10) according to any one of the claims 1 to 8, **characterized in that** it further comprises a transverse partition (43) extending along a direction perpendicular to the longitudinal axis (X2) of said arrangement (10) so as to isolate the first assembly of seats (11) from the second assembly of seats (12).

10. The arrangement (10) according to claim 9, **characterized in that** the transverse partition (43) is made in two parts (43.1, 43.2), which are retractable between a deployed position and a stored position, said two parts making it possible to independently separate the first seats of each assembly (11, 12) or the second seats of each assembly (11, 12) .

11. The arrangement (10) according to claim 10, **characterized in that**, in the stored position, each part (43.1, 43.2) of the transverse partition (43) is at least partially housed in a space (45) in a corresponding central console (27.1, 27.2).

12. The arrangement (10) according to any one of the claims 9 to 11, **characterized in that** the transverse partition (43) bears screens (44), which are each associated with a seat (13.1, 13.2, 13.3, 13.4) of said arrangement (10).

13. The arrangement (10) according to any one of the claims 1 to 12, **characterized in that** it further comprises at least one support (48) for a screen (44), said support (48) being rotatably mounted relative to a strut (40) and said screen (44) being rotatably mounted relative to said support (48).

14. The arrangement (10) according to any one of the claims 1 to 13, **characterized in that** it comprises at least one lateral partition (54.1, 54.2) extending along a circulation corridor (63), said lateral partition (54.1, 54.2) comprising means (55) for closing a passage (56) between the seat (13.1, 13.2, 13.3, 13.4) and the corresponding central console (27.1, 27.2).

15. The arrangement (10) according to claim 14, **characterized in that** the lateral partition (54.1, 54.2) is supported by struts (40).

16. The arrangement (10) according to claim 15, **characterized in that** the struts (40) are hollow for allowing the passage of electrical bundles conveying in particular power and data signals for multimedia systems associated with the seats (13.1, 13.2, 13.3, 13.4).

17. The arrangement (10) according to any one of the claims 1 to 16, **characterized in that** each seat (13.1, 13.2, 13.3, 13.4) is associated with a shell (20) positioned around the seat backs (13.1, 13.2, 13.3, 13.4).

18. An aircraft cabin (59) comprising:
- a central group of seats (61) and
- two lateral groups of seats (62) located on either side of the central group of seats (61),
- each lateral group of seats (62) being separated from the central group (61) by a circulation corridor (63), **characterized in that** the central group (61) comprises at least one arrangement (10) of four seats (13.1, 13.2, 13.3, 13.4) as defined according to any one of the preceding claims.

19. The aircraft cabin (59) according to claim 18, **characterized in that** the at least one arrangement (10) of four seats (13.1, 13.2, 13.3, 13.4) is located at one end of the central group of seats (61).

20. The aircraft cabin (59) according to claim 18 or 19, **characterized in that** the lateral groups (62) are formed in particular by a repetition of modules of two seats (13.1, 13.3 or 13.2-13.4) associated with a central console (27.1; 27.2) .
